# FASCICULE DE BREVET EUROPEEN

(11) **EP 3 380 578 B1**
(45) Date de publication et mention de la délivrance du brevet: **07.06.2023**
(21) Numéro de dépôt: 16815601.6
(22) Date de dépôt: 25.11.2016
(51) Int. Cl.: C09K 8/52

(54) **UTILISATION D'UN AMINOACIDE CARBOXYLIQUE PARTICULIER POUR LIMITER LA FORMATION ET/OU L'AGGLOMÉRATION D'HYDRATES DE GAZ**
VERWENDUNG EINER BESTIMMTEN CARBOXYLAMINOSÄURE ZUR BEGRENZUNG DER FORMUNG UND/ODER AGGLOMERIERUNG VON GASHYDRATEN
USE OF A PARTICULAR CARBOXYLIC AMINO ACID IN ORDER TO LIMIT THE FORMATION AND/OR AGGLOMERATION OF GAS HYDRATES

(30) Priorité: 27.11.2015 FR 1561490
(43) Date de publication de la demande: 03.10.2018
(73) Titulaire: ARKEMA FRANCE, 92700 Colombes (FR)
(72) Inventeur: POU, Tong Eak, 69540 Irigny (FR); MOSER, Frédéric, 69310 Pierre-benite (FR); BARRETO, Gilles, 69510 Messimy (FR); GILLET, Jean-Philippe, 69530 Brignais (FR)
(86) Numéro de dépôt international: PCT/FR2016/053092
(87) Numéro de publication internationale: WO 2017/089723

(56) Documents cités:
- WO-A1-94/24413
- WO-A1-95/19408
- FR-A1- 2 979 632
- US-A1- 2014 094 393

## Description

La présente invention porte sur l'utilisation d'un ou plusieurs aminoacides carboxyliques de structure particulière pour limiter, voire empêcher la formation et/ou l'agglomération d'hydrates de gaz.

La présente invention concerne également un procédé pour limiter, voire empêcher la formation et/ou l'agglomération d'hydrates de gaz, mettant en oeuvre de tels aminoacides carboxyliques.

La production de pétrole et/ou de gaz et/ou de condensats se fait dans différents environnements, et notamment dans des sites offshores et/ou dans des sites connaissant des périodes météorologiques froides, ce qui conduit à un refroidissement important des fluides produits au contact des parois froides des conduites de transport.

On entend par fluides produits les fluides comprenant le pétrole, les gaz, les condensats, l'eau et leurs mélanges.

Par pétrole, on entend au sens de la présente invention du pétrole brut, c'est-à-dire non raffiné, provenant d'un gisement.

Par gaz, on entend au sens de la présente invention des gaz naturels bruts, c'est-à-dire non traités, directement extrait d'un gisement, tels que par exemple des hydrocarbures, comme du méthane, de l'éthane, du propane, du butane, du sulfure d'hydrogène, du dioxyde de carbone et d'autres composés gazeux dans les conditions d'exploitation, ainsi que leurs mélanges. La composition du gaz naturel extrait varie considérablement selon les puits. Ainsi, le gaz peut comprendre des hydrocarbures gazeux, de l'eau et d'autres gaz.

Par condensats, on entend au sens de la présente invention des hydrocarbures de densité intermédiaire. Les condensats comprennent généralement des mélanges d'hydrocarbures, qui sont liquides dans les conditions d'exploitation.

Il est connu, que ces fluides de production, ou fluides produits comportent le plus souvent une phase aqueuse. L'origine de cette phase aqueuse peut être endogène et/ou exogène au réservoir souterrain contenant les hydrocarbures, la phase aqueuse exogène provenant généralement d'une injection d'eau (eau d'injection).

L'épuisement des sites anciennement découverts conduit aujourd'hui l'industrie pétrolière et gazière à produire, notamment sur de nouveaux sites, avec souvent des profondeurs de plus en plus importantes pour les sites offshores et avec des météorologies toujours plus extrêmes.

Sur les sites offshores, les conduites de transport des fluides produits, notamment en fond de mer, sont de plus en plus profondes pour atteindre des profondeurs où l'eau de mer est à des températures inférieures à 15°C, inférieures à 10°C, voire proches de ou égale à 4°C.

De même sur les sites situés dans certaines zones géographiques, l'air ou l'eau de surface peut être froid(e), typiquement en dessous de 15°C, ou en-dessous de 10°C. Or, à de telles températures, les fluides produits subissent un refroidissement important lors de leur transport. Ce refroidissement peut être encore amplifié dans le cas d'un arrêt ou d'un ralentissement de production, cas dans lesquels la durée de contact entre les fluides produits et les parois froides de la conduite augmente.

Lorsque la température des fluides produits baisse, l'industrie d'extraction de ces fluides est couramment confrontée à la formation de clathrates, également appelés cristaux d'hydrates, hydrates de gaz ou tout simplement hydrates. Le risque pour l'industrie d'extraction de ces fluides, et notamment d'extraction pétrolière, gazière et de condensats est d'autant plus grand que la température des fluides de production est basse et que la pression de ces fluides est élevée.

Ces problèmes de formation et/ou d'agglomération d'hydrates peuvent également être rencontrés au sein des boues de forage ou au sein des fluides de complétion, lors d'une opération de forage ou d'une opération de complétion.

Ces clathrates sont des cristaux solides (semblables à ceux de la glace) formés par des molécules d'eau, également nommées « receveur », autour d'une ou plusieurs molécules de gaz, également nommées « invités », tel que le méthane, l'éthane, le propane, butane, le gaz carbonique ou l'hydrogène sulfuré.

La formation et la croissance des cristaux d'hydrates, induites par un abaissement de la température des fluides de production, qui sortent chauds du réservoir géologique qui les contient et qui entrent dans une zone froide, peuvent provoquer le colmatage ou le bouchage des conduites de production, des conduites de transport des hydrocarbures (pétrole, condensats, gaz) ou de vannes, clapets et autres éléments susceptibles d'être bouchés totalement ou au moins partiellement. Ces colmatages/bouchages peuvent conduire à des pertes de production de pétrole, de condensats et/ou de gaz, entraînant des pertes économiques non négligeables, voire très importantes. En effet, ces colmatages et/ou bouchages auront pour conséquence une diminution du débit de production, voire un arrêt de l'unité de production. En cas de bouchage la recherche de la zone du bouchon et son élimination auront pour conséquence une perte de temps et de profit pour cette unité. Ces colmatages et/ou bouchages peuvent également entraîner des dysfonctionnements sur des éléments de sécurité (vannes de sécurité par exemple).

Pour diminuer, retarder ou inhiber la formation et/ou l'agglomération d'hydrates, diverses solutions ont déjà été proposées ou envisagées. Parmi celles-ci, on peut notamment citer une première solution qui consiste à déshydrater le pétrole brut ou le gaz en amont de la zone de la conduite, où la température favorise la formation de ces hydrates. Cette solution est cependant difficile, voire impossible, à mettre en oeuvre dans des conditions économiques satisfaisantes.

Une seconde approche, également très onéreuse, consiste à maintenir la température de la conduite à une température supérieure à la température de formation et/ou d'agglomération des hydrates, à une pression donnée.

Une troisième approche, fréquemment utilisée, consiste à ajouter un anti-hydrate thermodynamique, par exemple du méthanol, ou du glycol, dans les fluides produits contenant le mélange eau/gaz invité(s) pour déplacer la température d'équilibre de formation des hydrates. Afin d'obtenir une efficacité acceptable, environ 30% en poids d'alcool, par rapport à la quantité d'eau, sont généralement introduits. Cependant, la toxicité du méthanol et la grande quantité d'alcool utilisé conduisent de plus en plus les industriels à adopter une quatrième approche.

Cette quatrième solution consiste à ajouter un additif à faible dosage, appelé LDHI (« Low Dosage Hydrate Inhibitor ») dans les fluides produits comprenant le mélange eau/gaz invité(s). Cet additif est également appelé anti-hydrate et est introduit à un faible dosage, généralement compris entre 1% et 4% en poids, par rapport au poids de l'eau, étant entendu que des quantités supérieures ou inférieures sont bien entendu possibles. Deux types d'additifs anti-hydrates sont actuellement connus, les anti-agglomérants et les anti-hydrates cinétiques.

La formation d'hydrates dépend principalement de la température et de la pression, ainsi que de la composition du ou des gaz invité(s). Pour pouvoir comparer la performance des additifs, on utilise la notion de sub-cooling. On définit ainsi le sub-cooling (SC) (ou « sous-refroidissement ») par la différence entre la température des fluides produits (ou température d'exploitation T) et la température d'équilibre thermodynamique de formation des cristaux d'hydrates (Téq) pour une pression et une composition des gaz formateurs d'hydrates et de la phase aqueuse données, selon l'équation suivante : SC = T - Téq.

Lorsque le sub-cooling est inférieur ou égal à 0°C, il y a risque de formation d'hydrate de gaz.

Les anti-hydrates cinétiques agissent sur la germination et la croissance des cristaux d'hydrates. Ils retardent la formation d'hydrates de plusieurs heures, voire de plusieurs jours.

Cependant, ce type d'inhibiteur d'hydrates agit difficilement à des sub-coolings (SC) inférieurs à -10°C pour une pression donnée. En d'autres termes, le temps d'apparition des cristaux dans ces conditions est suffisamment court, pour qu'ils apparaissent et augmentent la perte de charge dans les conduites de transport des fluides de production pétrolière et gazière.

À l'inverse, les anti-agglomérants n'inhibent pas la formation de cristaux d'hydrates, mais les dispersent sous forme de particules fines, dénommées « slurry » en langue anglaise, ce qui par conséquent empêche leur agglomération. Les hydrates ainsi dispersés génèrent moins, voire ne génèrent plus, de colmatage ou bouchage, comme indiqué précédemment, limitant ainsi la perte de la production des hydrocarbures.

Contrairement aux anti-hydrates cinétiques, les anti-agglomérants permettent d'éviter les problèmes de bouchage et/ou de colmatage comme indiqué précédemment à des sub-coolings (SC) de l'ordre de -15°C à -20°C pour une pression donnée mais sont moins efficaces, voire perdent leur efficacité, à des sub-coolings encore inférieurs.

Par exemple, le document US2012/0161070 propose des compositions chimiques anti-agglomérantes. Cependant, les tests effectués sont limités à un sub-cooling de -17°C. De plus, la synthèse de ces tensioactifs nécessite 4 étapes réactionnelles, si l'on compte également les étapes pour obtenir l'amine grasse à partir de matières premières renouvelables constituées de l'acide gras. Limiter le nombre d'étapes de synthèse est important pour limiter le coût, les pertes de rendement, les déchets et les problèmes de qualité.

Le document US2012/0157351 propose également des compositions chimiques anti-agglomérantes. Les tests effectués sont cependant limités à un sub-cooling de -17°C et les autres compositions chimiques proposées ne sont pas efficaces pour disperser les hydrates avec un sub-cooling de -20°C.

Les documents WO 94/24413 et WO 95/19408 divulguent l'utilisation d'amioacides carboxyliques comme inhibiteurs de formation d'hydrates.

Compte-tenu du milieu d'exploitation (océans, mers), il est de plus en plus fréquent que les anti-agglomérants doivent également présenter une faible écotoxicité, une biodégradabilité satisfaisante et une bioaccumulation faible. Selon les recommandations de CEFAS (Centre for Environment, Fisheries and Aquaculture Science) en accord avec l'OSPAR (Oslo-Paris Commission), pour qu'un additif soit vert, c'est-à-dire compatible avec l'environnement, il faut qu'il remplisse deux des trois conditions suivantes :
1) présenter une écotoxicité (LC50 (effets létaux) et EC50 (effets toxiques) supérieure à 10 mg.L⁻¹ ;
2) présenter une biodégradabilité (OCDE 306) en milieu marin supérieure à 60% ; et
3) présenter une bioaccumulation (Log Pow) (OCDE 117) inférieure ou égale à 3 ou sa masse molaire supérieure à 700 g.mol⁻¹.

D'autres pays imposent également 2 de ces conditions sur 3 pour les additifs employés dans la production pétrolière et gazière comme par exemple les inhibiteurs de corrosion, les anti-hydrates cinétiques, les anti-agglomérants, les anti-dépôts minéraux, les désémulsionnants, les déshuilants, les additifs anti-mousse, les inhibiteurs et dispersants de paraffine, les inhibiteurs et dispersants d'asphaltènes, les piégeurs (« scavengers » en langue anglaise) d'hydrogène sulfuré.

II subsiste par conséquent, un réel besoin de développer un anti-agglomérant, de fabrication aisée, avec un faible nombre d'étapes de synthèse, facilement industrialisable, tout en respectant les recommandations de CEFAS, ou tout au moins, au moins une (1), de préférence au moins deux (2), de préférence encore trois (3) des conditions environnementales citées ci-dessus, et qui soit efficace pour un sub-cooling inférieur ou égal à -20°C, c'est-à-dire pour une différence de température entre la température d'extraction, ou d'exploitation, et la température d'équilibre thermodynamique à laquelle se forme les cristaux d'hydrates, égale ou inférieure à -20°C.

La Titulaire a maintenant découvert de manière surprenante que l'utilisation d'un ou plusieurs aminoacides carboxyliques de structure particulière permettait de répondre aux objectifs définis ci-dessus.

La présente invention a donc pour premier objet l'utilisation d'un ou plusieurs composés aminoacides carboxyliques de formule (I), ainsi que ses sels : 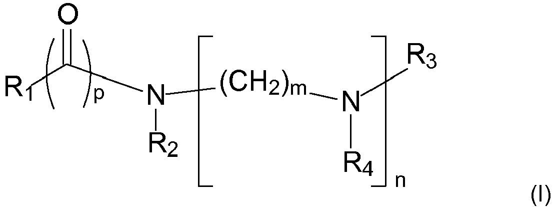 dans laquelle,
R₁ représente une chaîne alkyle, linéaire ou ramifiée, saturée ou insaturée, en C₆ à C₃₀, ladite chaîne pouvant également être interrompue par un ou plusieurs cycles hydrocarbonés,
R₂ représente l'atome d'hydrogène ou un groupement -(CHRₐ-CHR_{b})-COOR₅, avec Rₐ et R_{b}, identiques ou différents, représentant, indépendamment l'un de l'autre, l'atome d'hydrogène ou le groupe méthyle,
R₃ représente l'atome d'hydrogène ou un groupement -(CHRₐ-CHR_{b})-COOR₆, avec Rₐ et R_{b}, identiques ou différents, représentant, indépendamment l'un de l'autre, l'atome d'hydrogène ou le groupe méthyle,
R₄ représente l'atome d'hydrogène ou un groupement -(CHRₐ-CHR_{b})-COOR₇, avec Rₐ et R_{b}, identiques ou différents, représentant, indépendamment l'un de l'autre, l'atome d'hydrogène ou le groupe méthyle,
R₅, R₆ et R₇, identiques ou différents, représentent, indépendamment les uns des autres, l'atome d'hydrogène ou une chaîne alkyle, linéaire ou ramifiée, saturée ou insaturée, en C₁ à C₁₂,
étant entendu qu'au moins un des radicaux R₂, R₃ ou R₄ comporte une fonction acide carboxylique (-COOH)
m représente un entier allant de 1 à 6,
n représente un entier allant de 0 à 10, et
p est égal à 0 ou 1, de préférence p est égal à 0,
pour limiter, voire empêcher la formation et/ou l'agglomération d'hydrates de gaz.

L'utilisation du composé de formule (I) empêche ou limite l'agglomération des hydrates de gaz et reste efficace pour des sub-coolings inférieurs ou égaux à -20°C. Elle permet notamment de travailler à des températures plus basses que les températures actuelles tout en augmentant le rendement d'extraction des hydrocarbures fluides, de faciliter la complétion ou le forage à des basses températures et fortes pressions tout en limitant l'impact sur l'environnement.

L'utilisation du composé de formule (I) permet également de limiter l'emploi concomitant d'inhibiteur de corrosion.

La présente invention a également pour objet un procédé pour limiter, voire empêcher la formation et/ou l'agglomération d'hydrates de gaz, comportant une étape d'ajout d'un ou plusieurs composés de formule (I), tels que définis précédemment, dans un fluide de production comprenant une phase aqueuse et un ou plusieurs gaz.

Dans ce qui va suivre, et à moins d'une autre indication, les bornes d'un domaine de valeurs sont comprises dans ce domaine, notamment dans les expressions « compris entre » et « allant de ... à ... ».

D'autres objets, caractéristiques, aspects et avantages de l'invention apparaîtront encore plus clairement à la lecture de la description et des exemples qui suivent.

La présente invention porte également sur l'utilisation d'un ou plusieurs composés de formule (I), tels que définis précédemment, pour limiter, voire empêcher la formation et/ou l'agglomération d'hydrates de gaz.

De préférence, m est un entier allant de 2 à 4, et plus préférentiellement, m est égal à 2 ou 3.

De préférence, n est un entier allant de 0 à 4, et plus préférentiellement n est égal à 0, 1 ou 2.

De préférence, tous les radicaux Rₐ et R_{b} sont identiques ou différents, et plus préférentiellement tous les radicaux Rₐ sont identiques et tous les radicaux R_{b} sont identiques. Mieux encore tous les radicaux Rₐ et R_{b} sont identiques et de manière tout à fait préférée, tous les radicaux Rₐ et R_{b} représentent chacun l'atome d'hydrogène.

Selon un premier mode de réalisation préféré de l'invention, p est égal à 0, R₂ représente un groupement -(CH₂)₂-COOR₅, R₃ représente un groupement -(CH₂)₂-COOR₆ et R₄ représente un groupement (CH₂)₂COOR₇, avec R₅, R₆ et R₇, identiques ou différents, représentant, indépendamment les uns des autres, l'atome d'hydrogène ou une chaîne alkyle, linéaire ou ramifiée, saturée ou insaturée, en C₁ à C₁₂, au moins un des radicaux R₅, R₆ et R₇ représente l'atome d'hydrogène,

Plus particulièrement, R₅, R₆ et R₇ sont identiques et représentent chacun l'atome d'hydrogène.

Selon un second mode de réalisation avantageux de l'invention,
p est égal à 0, n est égal à 0,
R₁ représente une chaîne alkyle linéaire ou ramifiée, saturée ou insaturée en C₈ à C₁₈, de préférence en C₁₀ à C₁₈, plus préférentiellement en C₁₂ à C₁₈,
R₂ représente l'atome d'hydrogène,
R₃ représente un groupement -(CHRₐ-CHR_{b})-COOR₆, avec Rₐ et R_{b}, identiques ou différents, représentant indépendamment l'un de l'autre l'atome d'hydrogène ou le groupe méthyle, de préférence Rₐ et R_{b} étant identiques et représentant chacun l'atome d'hydrogène, et R₆ représentant l'atome d'hydrogène.

Selon un troisième mode de réalisation avantageux de l'invention,
p est égal à 0, n est égal à 0,
R₁ représente une chaîne alkyle linéaire ou ramifiée, saturée ou insaturée en C₈ à C₁₈, de préférence en C₁₀ à C₁₈, plus préférentiellement en C₁₂ à C₁₈,
R₂ représente un groupement -(CHRₐ-CHR_{b})-COOR₅, avec Rₐ et R_{b}, identiques ou différents, représentant indépendamment l'un de l'autre l'atome d'hydrogène ou le groupe méthyle, de préférence Rₐ et R_{b} étant identiques et représentant chacun l'atome d'hydrogène, et R₅ représentant l'atome d'hydrogène,
R₃ représente un groupement -(CHRₐ-CHR_{b})-COOR₆, avec Rₐ et R_{b}, identiques ou différents, représentant indépendamment l'un de l'autre l'atome d'hydrogène ou le groupe méthyle, de préférence Rₐ et R_{b} étant identiques et représentant chacun l'atome d'hydrogène, et R₆ représentant l'atome d'hydrogène.

Selon un mode de réalisation, lorsque p est égal à 1, alors R₂ représente l'atome d'hydrogène, et de préférence n est différent de zéro (0).

Selon un quatrième mode de réalisation avantageux de l'invention, R₁ représente une chaîne alkyle, telle que définie ci-dessus, c'est-à-dire une chaîne alkyle linéaire ou ramifiée, saturée ou insaturée, en C₆ à C₃₀, interrompue par un ou plusieurs groupements divalent -C(=O)-NH, le groupement divalent ne pouvant de préférence pas être en position terminale de la chaîne alkyle. De préférence, la chaîne alkyle est interrompue par un groupement divalent -C(=O)-NH-.

Les sels des composés de formule (I), utilisables selon la présente invention, peuvent notamment être des anions carboxylates et/ou des cations sur le ou les atomes d'azote.

Les contre-ions de ces sels peuvent être par exemple, et de manière non limitative, des ions alcalins (par exemple sodium, potassium), des ions alcalino-terreux (par exemple calcium, magnésium), des ammoniums, des phosphoniums, des halogénures (par exemple chlorure, bromure, iodure), sulfate, hydrogénosulfate, mésylate, des carboxylates, des hydrogénocarbonates, des carbonates, des phosphonates ou des phosphates.

Les composés de formule (I) utilisables dans le cadre de la présente invention sont connus et disponibles dans le commerce. De préférence, le composé de formule (I) peut notamment être le N-cocoyl-β-aminopropanoïque, le N-cocoyl-β-aminodipropanoïque, et leurs mélanges, le N-tallow-β-aminopropanoïque, le N-tallow-β-aminodipropanoïque, et leurs mélanges.

Ces composés présentent l'avantage d'être aisément synthétisables à partir de modes opératoires connus de l'homme du métier, c'est-à-dire d'être obtenus à partir d'une synthèse présentant peu d'étapes.

Le composé de formule (I) est utilisé en une quantité allant de préférence de 0,1% à 10% en poids, plus préférentiellement de 0,3% à 8% en poids, et mieux encore de 0,4% à 4% en poids, par rapport au poids total de la phase aqueuse dans un fluide de production.

La teneur en phase aqueuse pourra être mesurée sur un échantillon du fluide de production après décantation, selon les techniques connues de l'homme du métier.

De préférence, l'utilisation selon la présente invention limite, voire empêche, la formation et/ou l'agglomération d'hydrates de gaz lors de la production d'hydrocarbures, ou lors d'une opération de forage ou lors d'une opération de complétion.

Plus préférentiellement, l'utilisation selon la présente invention limite, voire empêche, la formation et/ou l'agglomération d'hydrates de gaz dans un procédé d'extraction de pétrole, de condensats ou de gaz, lors du forage, de l'opération de complétion ou lors de la production.

La limitation ou la réduction, voire l'empêchement ou le blocage de la formation d'hydrates peut être évaluée par le test décrit dans les exemples ci-après.

Procédé pour limiter, voire empêcher la formation et/ou l'agglomération d'hydrates de gaz

La présente invention a également pour objet un procédé pour limiter, voire empêcher la formation et/ou l'agglomération d'hydrates de gaz comportant une étape d'ajout d'un ou plusieurs composés de formule (I), tels que définis précédemment, dans un fluide de production comprenant une phase aqueuse et un ou plusieurs gaz.

La teneur totale de la phase aqueuse, présente dans le fluide de production, est généralement comprise entre 10% et 90% en poids, par rapport au poids total du fluide de production, c'est-à-dire par rapport au poids total des fluides.

La teneur totale en phase aqueuse définie ci-dessus correspond à la proportion totale de phase aqueuse initialement présente dans le fluide de production, c'est-à-dire dans le mélange initial (phase aqueuse et les autres liquides d'extraction bruts tels que les hydrocarbures, les condensats, ...).

La phase aqueuse du fluide de production comprend en outre un ou plusieurs gaz dissous susceptibles de former avec l'eau des hydrates de gaz à une température et à une pression donnée.

Certains des gaz présents dans la phase aqueuse du fluide de production sont les gaz dits « invités », tels que définis précédemment, et comprennent généralement le méthane, l'éthane, le propane, le butane, le gaz carbonique, l'hydrogène sulfuré, et leurs mélanges.

Le composé de formule (I) est ajouté dans le fluide de production en une quantité allant de préférence de 0,1% à 10% en poids, plus préférentiellement de 0,3% à 8% en poids, et mieux encore de 0,4% à 4% en poids, par rapport au poids total de phase aqueuse dans le fluide de production.

Selon un mode de réalisation avantageux, le composé de formule (I) est préalablement mis en solution dans un liquide choisi parmi l'eau, les solvants organiques et leurs mélanges.

Parmi les solvants organiques pouvant être utilisés, on peut notamment citer, à titre d'exemple non limitatifs, le méthanol, l'éthanol, l'iso-propanol, le n-butanol, l'iso-butanol, le 2-éthylhexanol, le glycérol, l'éthylèneglycol (ou monoéthylèneglycol), le 1,2-propylène glycol, le 1,3-propylène glycol, l'hexylèneglycol, le butylglycol, l'éthylèneglycol dibutyléther, la méthyléthylcétone, la méthylisobutylcétone, la diisobutylcétone, la N-méthylpyrrolidone, la cyclohexanone, les xylènes, le toluène, l'octan-1-ol, l'octan-2-ol et les mélanges de deux ou plusieurs d'entre eux en toutes proportions.

Selon un autre mode de réalisation, un ou plusieurs additifs, bien connus de l'homme du métier, peuvent être ajoutés. De tels additifs peuvent par exemple être choisis parmi, à titre non-limitatif, les anti-corrosions, les anti-paraffines, les anti-dépôts minéraux, les anti-asphaltènes, les désémulsionants, les tensio-actifs, et autres et leurs mélanges, comme décrits par exemple dans les documents US7381689 et WO2014/0105764, y compris les tensio-actifs cationiques, tels que par exemple les sels d'alkyltriméthylammonium quaternaires, les sels d'alkyldiméthylbenzylammonium quaternaires, les sels de dialkyldiméthylammonium quaternaires, les sels d'alkyl-imidazolinium, les alkylamines et leurs sels, les alkylamido(poly)amines et leurs sels, où alkyl- dénote une chaîne grasse hydrocarbonée (typiquement 8 à 30 atomes de carbone).

Lorsque le composé de formule (I) est préalablement mis en solution, il est avantageusement présent en une quantité supérieure ou égale à 10% en poids, plus préférentiellement allant de 15 à 75% en poids, et encore mieux allant de 20 à 60% en poids, par rapport au poids total de la solution.

La composition peut être introduite dans le fluide de production de manière continue, discontinue, régulièrement ou non, ou de manière temporaire, en une ou plusieurs fois. L'introduction de la composition est généralement effectuée en amont de la zone à risque de présence d'hydrates, que ce soit en surface, en tête de puits ou en fond de puits.

Selon un mode de réalisation avantageux, le fluide traité par le composé de formule (I) est une boue de forage ou un fluide de complétion.

Selon ce mode de réalisation, la composition est introduite dans la boue de forage ou dans le fluide de complétion, avant ou pendant l'injection de la boue de forage ou du fluide de complétion.

L'utilisation selon la présente invention présente notamment l'avantage de mettre en oeuvre un composé de formule (I), dont la synthèse est relativement aisée. Les composés mis en oeuvre dans le cadre de la présente invention présentent également souvent une activité anti-corrosion. Comme autres avantages apportés par la présente invention, on peut également citer le fait que les anti-hydrates utilisés respectent au moins une (1), de préférence au moins deux (2), voire toutes les trois (3) conditions environnementales citées précédemment, et notamment une biodégradabilité supérieure à 60% (OCDE 306), une écotoxicité (LC50 ou EC50) supérieure ou égale à 10 mg.L⁻¹, ainsi qu'une bioaccumulation (logPow) inférieure ou égale à 3 selon OCDE 117. En outre, les composés utiles dans le cadre de la présente invention, sont efficaces pour un sub-cooling d'au moins -20°C, mieux encore d'au moins -22°C, voire en-dessous.

L'invention sera mieux comprise à la lumière des exemples suivants, donnés à des fins d'illustration seulement et qui n'ont pas pour but de restreindre la portée de l'invention, définie par les revendications annexées.

### EXEMPLES

Dans les exemples qui suivent, toutes les quantités sont indiquées en pourcentage en poids par rapport au poids total de la composition, à moins d'une autre indication.

### Exemple 1 : test anti-agglomération

### Les compositions

Les compositions comparatives (A1 et A2) et la composition selon l'invention (B1) ont été préparées à partir des ingrédients, dont les teneurs sont indiquées, en pourcentage de matière active, dans le tableau ci-dessous.

| | Composition A1 (comparatif) | Composition A2 (comparatif) | Composition B1 (invention) |
|---|---|---|---|
| Amphoram^{®} CP1-MEG ⁽¹⁾ | - | - | 50 |
| Noramium^{®} M2C ⁽²⁾ | 50 | - | - |
| Noramium^{®} M2SH ⁽³⁾ | - | 50 | - |
| Butyl glycol | 50 | 50 | 50 |

| | | | |
|---|---|---|---|
| ⁽¹⁾ Amphoram^{®} CP1 (comprenant N cocoylamine, N-cocoyl-β-aminopropanoïque et N-cocoyl-β-aminodipropanoïque) en mélange avec du monoéthylène glycol (MEG) commercialisé par CECA S.A. ⁽²⁾ chlorure de di-coco-diméthylammonium, commercialisé par CECA S.A. ⁽³⁾ chlorure de di-tallow-hydrogénodiméthylammonium, commercialisé par CECA S.A. | | | |

### Le protocole

Les efficacités des compositions A1, A2 et B1, comme anti-agglomérants, ont été déterminées sur un fluide modèle représentant un fluide de production, contenant du tétrahydrofurane (THF). Les hydrates de THF se forment à pression atmosphérique et sont régulièrement utilisés pour détecter l'efficacité de composés candidats comme anti-agglomérant d'hydrates de gaz.

Le fluide modèle comprend :
- 50% en poids de phase aqueuse constituée d'un mélange d'eau déminéralisée et de tétrahydrofurane (THF) dans un ratio 1:1, et
- 50% en poids d'iso-octane.

La température d'équilibre thermodynamique de formation d'hydrate de ce fluide modèle est de 2°C à pression atmosphérique. En d'autres termes, les hydrates de THF se forment à des températures inférieures ou égales à 2°C.

L'efficacité anti-agglomérante des compositions anti-hydrates a été mesurée à différents sub-coolings (-12°C et -22°C) et pour différents dosages. Le dosage correspond à la quantité de composition anti-hydrate introduite dans la phase aqueuse du fluide de production.

Le sub-cooling représente la différence de température entre la température d'exploitation, ou imposée, et la température d'équilibre thermodynamique de formation d'hydrate du fluide de production. En d'autres termes, pour un sub-cooling de -12°C, la température imposée doit être -10°C. De même pour un sub-cooling de -22°C, la température doit être -20°C.

Le dispositif expérimental, notamment décrit par M.L. Zanota (M.L. Zanota et coll., Energy & Fuel, 2005, 19(2), (2005), 584-590), est composé d'un moteur qui impose un mouvement d'oscillation à un rack. Le rack contient 12 tubes en verre borosilicaté, ayant un diamètre de 17 mm et une hauteur de 60 mm.

Chaque tube est fermé et contient le mélange décrit ci-dessus ainsi qu'une bille en acier inox 316L de diamètre 0,8 cm. La bille permet d'agiter le mélange, d'observer visuellement l'agglomération des cristaux d'hydrates et constitue une amorce de cristallisation.

Le rack est immergé dans un bain thermostaté, comprenant un mélange eau/éthylèneglycol (1/1), dont la température varie entre -30°C et 30°C grâce à un variostat de marque Huber.

Les différents échantillons sont soumis à des cycles de refroidissement et réchauffement gérés par le variostat programmable. Les vitesses de descente en température sont définies et programmées. Le variostat est muni de deux sondes de température, interne et externe, reliées à un ordinateur permettant de suivre et d'enregistrer la température grâce au logiciel Spy watch 1.1.

### Dosage : 1% en poids

Les tubes ont été divisés en quatre groupes de trois:
Groupe 1 (contrôle) : mélange aqueux sans additif
Groupe 2 (comparatif) : mélange aqueux + 1% en poids de composition A1, par rapport au poids total de la phase aqueuse,
Groupe 3 (comparatif) : mélange aqueux + 1% en poids de composition A2, par rapport au poids total de la phase aqueuse,
Groupe 4 (invention) : mélange aqueux + 1% en poids de composition B1 par rapport au poids total de la phase aqueuse,
Dosage : 3% en poids

Les tubes ont été divisés en quatre groupes de trois :
Groupe 5 (contrôle) : mélange aqueux sans additif
Groupe 6 (comparatif) : mélange aqueux + 3% en poids de composition A1 par rapport au poids total de la phase aqueuse,
Groupe 7 (comparatif) : mélange aqueux + 3% en poids de composition A2, par rapport au poids total de la phase aqueuse,
Groupe 8 (invention) : mélange aqueux + 3% en poids de composition B1 par rapport au poids total de la phase aqueuse.

Les tubes ainsi préparés sont placés dans le bain thermostaté à une température de 20°C et sous agitation. La température est ensuite abaissée à -10°C, ce qui correspond à un sub-cooling de -12°C. À cette température, l'oscillation est maintenue pendant 20 heures (on observe visuellement le mouvement des billes dans les tubes) avant d'être arrêtée. Après deux heures d'arrêt à -10°C, l'agitation est redémarrée, et on observe de nouveau le mouvement des billes dans les tubes.

On descend ensuite la température à -20°C (toujours à raison de -1°C par minute), ce qui correspond à un sub-cooling de -22°C. À cette température de -20°C, l'oscillation est maintenue pendant 20 heures avant d'être arrêtée. Après deux heures d'arrêt à -20°C, l'agitation est redémarrée, et on observe visuellement le mouvement des billes dans les tubes.

L'efficacité de chacune des compositions A1, A2 et B1 a ensuite été évaluée visuellement en observant le mouvement des billes dans les tubes. Si les billes circulent, le produit testé est efficace. À l'inverse, si les billes restent bloquées, ou si des cristaux d'hydrates sont collés sur la paroi du tube, le produit testé n'est pas un anti-agglomérant efficace.

### Résultats

Les résultats de chacun des groupes décrits ci-dessus sont exprimés dans les tableaux ci-dessous :

**Tableau 1 : dosage 1%**

| Sub-cooling | ***Nombre de billes bloquées après 20h d'agitation*** | | ***Nombre de billes bloquées après 2h d'arrêt*** | |
|---|---|---|---|---|
| | -12°C | -22°C | -12°C | -22°C |
| Groupe 1 (contrôle) | 3/3 | 3/3 | 3/3 | 3/3 |
| Groupe 2 (composition A1) | 2/3 | 3/3 | 3/3 | 3/3 |
| Groupe 3 (composition A2) | 2/3 | 3/3 | 3/3 | 3/3 |
| Groupe 4 (composition B1) | 0/3 | 0/3 | 0/3 | 0/3 |

**Tableau 2 : dosage 3%**

| Sub-cooling | ***Nombre de billes bloquées après 20h d'agitation*** | | ***Nombre de billes bloquées après 2h d'arrêt*** | |
|---|---|---|---|---|
| | -12°C | -22°C | -12°C | -22°C |
| Groupe 5 (contrôle) | 3/3 | 3/3 | 3/3 | 3/3 |
| Groupe 6 (composition A1) | 1/3 | 3/3 | 2/3 | 3/3 |
| Groupe 7 (composition A2) | 0/3 | 3/3 | 1/3 | 3/3 |
| Groupe 8 (composition B1) | 0/3 | 0/3 | 0/3 | 0/3 |

Les résultats des tableaux ci-dessus montrent que le composé de formule (I) conduit à de meilleures propriétés d'anti-agglomération que les composés présents dans les compositions comparatives (A1 et A2), quel que soit le dosage. En effet, à un sub-cooling de -12°C, après arrêt de l'oscillation, et donc sans agitation, les billes sont libres en présence du composé de l'invention (groupes 4 et 8), alors qu'elles sont bloquées pour les autres groupes, comparatifs et contrôle. En conséquence, les hydrates formés sont dispersés (sous forme de slurry) en présence du composé de l'invention, alors qu'ils restent agglomérés en présence des composés comparatifs.

### Exemple 2 : tests écotoxicités

Selon le test OCDE 306 (milieu marin), la composition de l'invention (B1), comprenant un composé de formule (I), a une biodégradabilité de 70%, i.e. supérieure à 60%. Elle est donc classée « facilement biodégradable ». Son Log Pow mesuré selon OCDE 117 par HPLC est de 2.93 < 3. Son écotoxicité Algues est de 2 mg.L⁻¹.

Les données d'écotoxicité de la composition B1 sont rassemblées dans le tableau ci-dessous.

| ***Données écotoxicité*** | ***Ecotoxicité (algues)*** | ***Ecotoxicité (poisson)*** | ***Bio-dégradabilité milieu marin (OCDE 306)*** | ***Bio-accumulation (Low Pow)*** |
|---|---|---|---|---|
| Composition B1 | 2 (mg.L⁻¹) | 3,9 (mg.L⁻¹) | 70% | 2,93 |

La composition B1 répond à deux des conditions mentionnées précédemment. Sa biodégradabilité en milieu marin est supérieure à 60% et sa bioaccumulation est inférieure à 3.

L'utilisation de la composition B1 telle que définie précédemment, est ainsi compatible avec l'environnement. À l'inverse, le Noramium^{®} M2C et le Noramium^{®} M2SH sont bio-accumulables et ne sont pas biodégradables. Leur utilisation n'est donc pas compatible avec les normes environnementales en vigueur.

## Revendications

1. Utilisation d'un ou plusieurs composés aminoacides carboxyliques de formule (I), ainsi que ses sels : 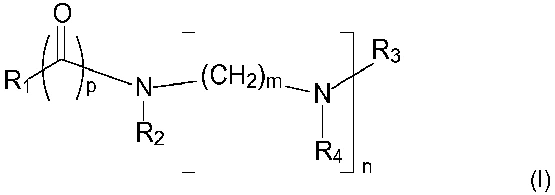 dans laquelle,
R₁ représente une chaîne alkyle, linéaire ou ramifiée, saturée ou insaturée, en C₆ à C₃₀, ladite chaîne pouvant également être interrompue par un ou plusieurs cycles hydrocarbonés,
R₂ représente l'atome d'hydrogène ou un groupement -(CHRₐ-CHR_{b})-COOR₅, avec Rₐ et R_{b}, identiques ou différents, représentant, indépendamment l'un de l'autre, l'atome d'hydrogène ou le groupe méthyle,
R₃ représente l'atome d'hydrogène ou un groupement -(CHRₐ-CHR_{b})-COOR₆, avec Rₐ et R_{b}, identiques ou différents, représentant, indépendamment l'un de l'autre, l'atome d'hydrogène ou le groupe méthyle,
R₄ représente l'atome d'hydrogène ou un groupement -(CHRₐ-CHR_{b})-COOR₇, avec Rₐ et R_{b}, identiques ou différents, représentant, indépendamment l'un de l'autre, l'atome d'hydrogène ou le groupe méthyle,
R₅, R₆ et R₇, identiques ou différents, représentent, indépendamment les uns des autres, l'atome d'hydrogène ou une chaîne alkyle, linéaire ou ramifiée, saturée ou insaturée, en C₁ à C₁₂,
étant entendu qu'au moins un des radicaux R₂, R₃ ou R₄ comporte une fonction acide carboxylique (-COOH)
m représente un entier allant de 1 à 6, et
n représente un entier allant de 0 à 10,
p est égal à 0 ou 1, de préférence p est égal à 0,
pour limiter, voire empêcher la formation et/ou l'agglomération d'hydrates de gaz.

2. Utilisation selon la revendication précédente, **caractérisée en ce que** les composés de formule (I) sont choisis parmi les composés dans lesquels p est égal à 0, R₂ représente un groupement -(CH₂)₂-COOR₅, R₃ représente un groupement -(CH₂)₂-COOR₆ et R₄ représente un groupement -(CH₂)₂-COOR₇, avec R₅, R₆ et R₇, identiques ou différents, représentent, indépendamment les uns des autres, l'atome d'hydrogène ou une chaîne alkyle, linéaire ou ramifiée, saturée ou insaturée, en C₁ à C₁₂, au moins un des radicaux R₅, R₆ et R₇ représente l'atome d'hydrogène.

3. Utilisation selon l'une quelconque des revendications 1 et 2, **caractérisée en ce que** les composés de formule (I) sont choisis parmi les composés dans lesquels R₅, R₆ et R₇ sont identiques et représentent chacun l'atome d'hydrogène.

4. Utilisation selon l'une quelconque des revendications précédentes, **caractérisée en ce que** les composés de formule (I) sont choisis parmi les composés dans lesquels n est un entier allant de 0 à 4, et de préférence n est égal à 0, 1 ou 2.

5. Utilisation selon la revendication 1, **caractérisée en ce que** les composés de formule (I) sont choisis parmi les composés dans lesquels :
p est égal à 0, n est égal à 0,
R₁ représente une chaîne alkyle, linéaire ou ramifiée, saturée ou insaturée en C₈ à C₁₈,
de préférence en C₁₀ à C₁₈, plus préférentiellement en C₁₂ à C₁₈,
R₂ représente l'atome d'hydrogène, et
R₃ représente un groupement -(CHRₐ-CHR_{b})-COOR₆, avec Rₐ et R_{b}, identiques ou différents, représentant, indépendamment l'un de l'autre, l'atome d'hydrogène ou le groupe méthyle, de préférence Rₐ et R_{b} étant identiques et représentant chacun l'atome d'hydrogène, et R₆ représentant l'atome d'hydrogène.

6. Utilisation selon la revendication 1, **caractérisée en ce que** les composés de formule (I) sont choisis parmi les composés dans lesquels :
p est égal à 0, n est égal à 0,
R₁ représente une chaîne alkyle, linéaire ou ramifiée, saturée ou insaturée en C₈ à C₁₈, de préférence en C₁₀ à C₁₈, plus préférentiellement en C₁₂ à C₁₈,
R₂ représente un groupement -(CHRₐ-CHR_{b})-COOR₅, avec Rₐ et R_{b}, identiques ou différents, représentant, indépendamment l'un de l'autre, l'atome d'hydrogène ou le groupe méthyle, de préférence Rₐ et R_{b} étant identiques et représentant chacun l'atome d'hydrogène, et R₅ représentant l'atome d'hydrogène, et
R₃ représente un groupement -(CHRₐ-CHR_{b})-COOR₆, avec Rₐ et R_{b}, identiques ou différents, représentant, indépendamment l'un de l'autre, l'atome d'hydrogène ou le groupe méthyle, de préférence Rₐ et R_{b} étant identiques et représentant chacun l'atome d'hydrogène, et R₆ représentant l'atome d'hydrogène.

7. Utilisation selon l'une quelconque des revendications précédentes, **caractérisée en ce que** la formation et/ou l'agglomération d'hydrates de gaz est limitée, voire empêchée, dans un procédé d'extraction de pétrole, de condensats ou de gaz, lors du forage, de l'opération de complétion ou lors de la production.

8. Procédé pour limiter, voire empêcher la formation et/ou l'agglomération d'hydrates de gaz comportant une étape d'ajout d'un ou plusieurs composés de formule (I), tels que décrits dans l'une quelconque des revendications 1 à 6, dans un fluide de production comprenant une phase aqueuse et un ou plusieurs gaz.

9. Procédé selon la revendication 8, **caractérisé en ce que** le ou les composés de formule (I) sont préalablement mis en solution dans un liquide choisi parmi l'eau, les solvants organiques et leurs mélanges.

10. Procédé selon la revendication 9, **caractérisé en ce que** le ou les solvants organiques sont choisis parmi le méthanol, l'éthanol, l'iso-propanol, le n-butanol, l'iso-butanol, le 2-éthylhexanol, le glycérol, l'éthylèneglycol (ou monoéthylèneglycol), le 1,2-propylène glycol, le 1,3-propylène glycol, l'hexylèneglycol, le butylglycol, l'éthylèneglycoldibutyléther, la méthyléthylcétone, la méthylisobutylcétone, la diisobutylcétone, la N-méthylpyrrolidone, la cyclohexanone, les xylènes, le toluène, l'octan-1-ol, l'octan-2-ol et les mélanges de deux ou plusieurs d'entre eux en toutes proportions.

11. Procédé selon l'une quelconque des revendications 8 à 10, **caractérisé en ce que** le composé de formule (I) est ajouté dans le fluide de production en une quantité allant de 0,1% à 10% en poids, de préférence de 0,3% à 8% en poids, et plus préférentiellement de 0,4% à 4% en poids, par rapport au poids total de la phase aqueuse du fluide de production.

## Patentansprüche

1. Verwendung einer oder mehrerer Aminocarbonsäureverbindungen mit der Formel (I) sowie ihrer Salze: 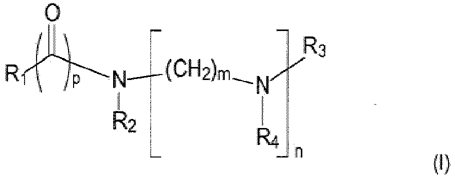 worin
R₁ eine unverzweigte oder verzweigte, gesättigte oder ungesättigte Alkylkette mit C₆ bis C₃₀ darstellt, wobei die Kette auch von einem oder mehreren Kohlenwasserstoffringen unterbrochen sein kann,
R₂ ein Wasserstoffatom oder eine Gruppe -(CHRₐ-CHR_{b})-COOR₅ darstellt, wobei Rₐ und R_{b} gleich oder unterschiedlich sein können und unabhängig voneinander ein Wasserstoffatom oder eine Methylgruppe darstellen,
R₃ ein Wasserstoffatom oder eine Gruppe -(CHRₐ-CHR_{b})-COOR₆ darstellt, wobei Rₐ und R_{b} gleich oder unterschiedlich sein können und unabhängig voneinander ein Wasserstoffatom oder eine Methylgruppe darstellen,
R₄ ein Wasserstoffatom oder eine Gruppe -(CHRₐ-CHR_{b})-COOR₇ darstellt, wobei Rₐ und R_{b} gleich oder unterschiedlich sein können und unabhängig voneinander ein Wasserstoffatom oder eine Methylgruppe darstellen,
R₅, R₆ und R₇ gleich oder unterschiedlich sein können und unabhängig voneinander ein Wasserstoffatom oder eine unverzweigte oder verzweigte, gesättigte oder ungesättigte Alkylkette mit C₁ bis C₁₂ darstellen,
wobei mindestens einer der Reste R₂, R₃ oder R₄ eine funktionelle Carbonsäuregruppe (-COOH) aufweist,
m eine ganze Zahl von 1 bis 6 darstellt, und
n eine ganze Zahl von 0 bis 10 darstellt,
p 0 oder 1 ist, p vorzugsweise 0 ist,
zum Einschränken oder sogar Verhindern der Bildung und/oder Agglomeration von Gashydraten.

2. Verwendung nach dem vorangehenden Anspruch, **dadurch gekennzeichnet, dass** die Verbindungen mit der Formel (I) aus den Verbindungen ausgewählt sind, in denen p 0 ist, R₂ eine Gruppe -(CH2)₂-COOR₅ darstellt, R₃ eine Gruppe - (CH₂)₂-COOR₆ darstellt und R₄ eine Gruppe - (CH₂)₂-COOR₇ darstellt, wobei R₅, R₆ und R₇ gleich oder unterschiedlich sein können und unabhängig voneinander ein Wasserstoffatom oder eine unverzweigte oder verzweigte, gesättigte oder ungesättigte Alkylkette mit C₁ bis C₁₂ darstellen, mindestens einer der Reste R₅, R₆ und R₇ ein Wasserstoffatom darstellt.

3. Verwendung nach einem der Ansprüche 1 und 2, **dadurch gekennzeichnet, dass** die Verbindungen mit der Formel (I) aus den Verbindungen ausgewählt sind, in denen R₅, R₆ und R₇ gleich sind und jeweils ein Wasserstoffatom darstellen.

4. Verwendung nach einem der vorhergehenden Ansprüche, **dadurch gekennzeichnet, dass** die Verbindungen mit der Formel (I) aus den Verbindungen ausgewählt sind, in denen n eine ganze Zahl von 0 bis 4 ist und n vorzugsweise 0, 1 oder 2 ist.

5. Verwendung nach Anspruch 1, **dadurch gekennzeichnet, dass** die Verbindungen mit der Formel (I) aus den Verbindungen ausgewählt sind, in denen:
p 0 ist, n 0 ist,
R₁ eine unverzweigte oder verzweigte, gesättigte oder ungesättigte Alkylkette mit C₈ bis C₁₈, vorzugsweise mit C₁₀ mit C₁₈, bevorzugter mit C₁₂ bis C₁₈ ist,
R₂ ein Wasserstoffatom darstellt und
R₃ eine Gruppe -(CHRₐ-CHR_{b})-COOR₆ darstellt, wobei Rₐ und R_{b} gleich oder unterschiedlich sein können und unabhängig voneinander ein Wasserstoffatom oder eine Methylgruppe darstellen, Rₐ und R_{b} vorzugsweise gleich sind und jeweils ein Wasserstoffatom darstellen und R₆ ein Wasserstoffatom darstellt.

6. Verwendung nach Anspruch 1, **dadurch gekennzeichnet, dass** die Verbindungen mit der Formel (I) aus den Verbindungen ausgewählt sind, in denen:
p 0 ist, n 0 ist,
R₁ eine unverzweigte oder verzweigte, gesättigte oder ungesättigte Alkylkette mit C₈ bis C₁₈, vorzugsweise mit C₁₀ mit C₁₈, bevorzugter mit C₁₂ bis C₁₈ ist,
R₂ eine Gruppe -(CHRₐ-CHR_{b})-COOR₅ darstellt, wobei Rₐ und R_{b} gleich oder unterschiedlich sein können und unabhängig voneinander ein Wasserstoffatom oder eine Methylgruppe darstellen, Rₐ und R_{b} vorzugsweise gleich sind und jeweils ein Wasserstoffatom darstellen und R₅ ein Wasserstoffatom darstellt, und
R₃ eine Gruppe -(CHRₐ-CHR_{b})-COOR₆ darstellt, wobei Rₐ und R_{b} gleich oder unterschiedlich sein können und unabhängig voneinander ein Wasserstoffatom oder eine Methylgruppe darstellen, Rₐ und R_{b} vorzugsweise gleich sind und jeweils ein Wasserstoffatom darstellen und R₆ ein Wasserstoffatom darstellt.

7. Verwendung nach einem der vorhergehenden Ansprüche, **dadurch gekennzeichnet, dass** in einem Verfahren zur Förderung von Erdöl, Kondensaten oder Erdgas beim Bohren, beim Vorgang der Komplettierung oder bei der Förderung die Bildung und/oder Agglomeration von Gashydraten eingeschränkt oder sogar verhindert wird.

8. Verfahren zum Einschränken oder sogar zum Verhindern der Bildung und/oder Agglomeration von Gashydraten, das einen Schritt zum Zugeben von einer oder mehreren Verbindungen mit der Formel (I), wie sie in einem der Ansprüche 1 bis 6 beschrieben sind, in ein Förderfluid umfasst, das eine wässrige Phase und ein oder mehrere Gase umfasst.

9. Verfahren nach Anspruch 8, **dadurch gekennzeichnet, dass** die Verbindung oder Verbindungen mit der Formel (I) zuvor in einer Flüssigkeit, die aus Wasser, organischen Lösungsmitteln und ihren Mischungen ausgewählt wird, in Lösung gebracht wird.

10. Verfahren nach Anspruch 9, **dadurch gekennzeichnet, dass** das oder die organische(n) Lösungsmittel ausgewählt wird bzw. werden aus Methanol, Ethanol, Isopropanol, n-Butanol, Isobutanol, 2-Ethylhexanol, Glycerol, Ethylenglycol (oder Monoethylenglycol), 1,2-Propylenglycol, 1,3-Propylenglycol, Hexylenglycol, Butylglycol, Ethylenglycoldibutylether, Methylethylketon, Methylisobutylketon, Diisobutylketon, N-Methylpyrrolidon, Cyclohexanon, Xylolen, Toluol, Octan-1-ol, Octan-2-ol und Mischungen von zwei oder mehreren davon in beliebigen Anteilen.

11. Verfahren nach einem der Ansprüche 8 bis 10, **dadurch gekennzeichnet, dass** die Verbindung mit der Formel (I) in das Förderfluid in einer Menge von 0,1 Gewichts-% bis 10 Gewichts-%, vorzugsweise 0,3 Gewichts-% bis 8 Gewichts-% und bevorzugter von 0,4 Gewichts-% bis 4 Gewichts-% bezogen auf das Gesamtgewicht der wässrigen Phase des Förderfluids zugegeben wird.

## Claims

1. Use of one or more carboxylic amino acid compounds of formula (I), and salts thereof: 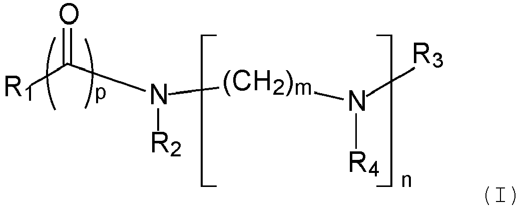 in which:
R₁ represents a linear or branched, saturated or unsaturated C₆ to C₃₀ alkyl chain, said chain also possibly being interrupted with one or more hydrocarbon-based rings,
R₂ represents a hydrogen atom or a group -(CHRₐ-CHR_{b})-COOR₅, with Rₐ and R_{b}, which may be identical or different, representing, independently of each other, a hydrogen atom or a methyl group,
R₃ represents a hydrogen atom or a group -(CHRₐ-CHR_{b})-COOR₆, with Rₐ and R_{b}, which may be identical or different, representing, independently of each other, a hydrogen atom or a methyl group,
R₄ represents a hydrogen atom or a group -(CHRₐ-CHR_{b})-COOR₇, with Rₐ and R_{b}, which may be identical or different, representing, independently of each other, a hydrogen atom or a methyl group,
R₅, R₆ and R₇, which may be identical or different, represent, independently of each other, a hydrogen atom or a linear or branched, saturated or unsaturated C₁ to C₁₂ alkyl chain,
it being understood that at least one of the radicals R₂, R₃ or R₄ comprises a carboxylic acid function (-COOH),
m represents an integer ranging from 1 to 6, and
n represents an integer ranging from 0 to 10,
p is equal to 0 or 1 and preferably p is equal to 0, for limiting, or even preventing, the formation and/or
agglomeration of gas hydrates.

2. Use according to the preceding claim, **characterized in that** the compounds of formula (I) are chosen from the compounds in which p is equal to 0, R₂ represents a group -(CH₂)₂-COOR₅, R₃ represents a group - (CH₂)₂-COOR₆ and R₄ represents a group - (CH₂)₂-COOR₇, with R₅, R₆ and R₇, which may be identical or different, representing, independently of each other, a hydrogen atom or a linear or branched, saturated or unsaturated C₁ to C₁₂ alkyl chain, at least one of the radicals R₅, R₆ and R₇ representing a hydrogen atom.

3. Use according to either of Claims 1 and 2, **characterized in that** the compounds of formula (I) are chosen from compounds in which R₅, R₆ and R₇ are identical and each represent a hydrogen atom.

4. Use according to any one of the preceding claims, **characterized in that** the compounds of formula (I) are chosen from the compounds in which n is an integer ranging from 0 to 4, and preferably n is equal to 0, 1 or 2.

5. Use according to Claim 1, **characterized in that** the compounds of formula (I) are chosen from the compounds in which:
p is equal to 0 and n is equal to 0,
R₁ represents a linear or branched, saturated or unsaturated C₈ to C₁₈, preferably C₁₀ to C₁₈ and more preferentially C₁₂ to C₁₈ alkyl chain,
R₂ represents a hydrogen atom, and
R₃ represents a group - (CHRₐ-CHR_{b})-COOR₆, with Rₐ and R_{b}, which may be identical or different, representing, independently of each other, a hydrogen atom or a methyl group, Rₐ and R_{b} preferably being identical and each representing a hydrogen atom, and R₆ representing a hydrogen atom.

6. Use according to Claim 1, **characterized in that** the compounds of formula (I) are chosen from the compounds in which:
p is equal to 0 and n is equal to 0,
R₁ represents a linear or branched, saturated or unsaturated C₈ to C₁₈, preferably C₁₀ to C₁₈ and more preferentially C₁₂ to C₁₈ alkyl chain,
R₂ represents a group -(CHRₐ-CHR_{b})-COOR₅, with Rₐ and R_{b}, which may be identical or different, representing, independently of each other, a hydrogen atom or a methyl group, Rₐ and R_{b} preferably being identical and each representing a hydrogen atom, and R₅ representing a hydrogen atom, and
R₃ represents a group -(CHRₐ-CHR_{b})-COOR₆, with Rₐ and R_{b}, which may be identical or different, representing, independently of each other, a hydrogen atom or a methyl group, Rₐ and R_{b} preferably being identical and each representing a hydrogen atom, and R₆ representing a hydrogen atom.

7. Use according to any one of the preceding claims, **characterized in that** the formation and/or agglomeration of gas hydrates is limited or even prevented in a process for extracting petroleum, condensates or gas, during drilling, the completion operation or during production.

8. Process for limiting or even preventing the formation and/or agglomeration of gas hydrates, comprising a step of adding one or more compounds of formula (I) as defined in any one of Claims 1 to 6, in a production fluid comprising an aqueous phase and one or more gases.

9. Process according to Claim 8, **characterized in that** the compound(s) of formula (I) are predissolved in a liquid chosen from water and organic solvents, and mixtures thereof.

10. Process according to Claim 9, **characterized in that** the organic solvent(s) are chosen from methanol, ethanol, isopropanol, n-butanol, isobutanol, 2-ethylhexanol, glycerol, ethylene glycol (or monoethylene glycol), 1,2-propylene glycol, 1,3-propylene glycol, hexylene glycol, butylglycol, ethylene glycol dibutyl ether, methyl ethyl ketone, methyl isobutyl ketone, diisobutyl ketone, N-methylpyrrolidone, cyclohexanone, xylenes, toluene, 1-octanol and 2-octanol, and mixtures of two or more thereof in all proportions.

11. Process according to any one of Claims 8 to 10, **characterized in that** the compound of formula (I) is added to the production fluid in an amount ranging from 0.1% to 10% by weight, preferably from 0.3% to 8% by weight and more preferentially from 0.4% to 4% by weight, relative to the total weight of the aqueous phase of the production fluid.
